# EUROPÄISCHE PATENTANMELDUNG

(11) **EP 3 431 372 A1**
(43) Veröffentlichungstag der Anmeldung: **23.01.2019**
(21) Anmeldenummer: 18181238.9
(22) Anmeldetag: 02.07.2018
(51) Int. Cl.: B62D 33/03, B60P 1/00

(54) **BORDWANDELEMENT SOWIE NUTZFAHRZEUG MIT EINEM DERARTIGEN BORDWANDELEMENT**

(30) Priorität: 19.07.2017 DE 202017104312 U
(71) Anmelder: INMET Stahl GmbH & Co. KG, 44892 Bochum (DE)
(72) Erfinder: GRUPINSKI, Peter, 94577 Winzer (DE)
(74) Vertreter: advotec.

(57) **Zusammenfassung**

Bordwandelement (1), insbesondere Bordwand für Nutzfahrzeuge, wie LKW's, Anhänger, Pritschenfahrzeuge, Kipper oder landwirtschaftliche Fahrzeuge, mit einem oberen Längsrand (2) und einem unteren Längsrand (3) sowie zwei Seitenrändern (4), dadurch gekennzeichnet, dass im Bereich des unteren Längsrandes (3) eine Aufnahmeeinrichtung (5) zur Aufnahme eines Dichtelements (11) und/oder eines Nutsteins (19) angeordnet ist.

## Beschreibung

Die vorliegende Erfindung betrifft ein Bordwandelement, insbesondere eine Bordwand für Nutzfahrzeuge, wie LKW's, Anhänger, Pritschenfahrzeuge, Kipper oder landwirtschaftliche Fahrzeuge, mit einem oberen Längsrand und einem unteren Längsrand sowie zwei Seitenrändern.

Derartige Bordwandelemente sind bei Nutzfahrzeugen aus dem Stand der Technik bekannt. Diese Bordwandelemente bestehen in der Regel aus Metall oder anderen Materialien und sind aus Stabilitätsgründen mit mehreren, verschiedenen Sicken profiliert. Diese Bordwandelemente begrenzen seitlich einen Laderaum, welcher bodenseitig von einem Laderaumboden begrenzt wird. Die Bordwandelemente sind in der Regel schwenkbar an einem Rahmen gelagert, um den Laderaum füllen oder Ladegut entnehmen zu können.

Im geschlossenen Zustand des Laderaums besteht in der Regel zwischen der Ladebordwand und dem Laderaumboden ein Spalt. Durch diesen Spalt kann beispielsweise Schüttgut oder ähnliches Material beim Transport durch Herausfallen aus dem Laderaum verloren gehen. Um dies zu verhindern, wurde bei den bekannten Nutzfahrzeugen beispielsweise eine Stahlleiste am unteren Rand der Ladebordwand angebracht. Eine derartige Leiste hat den Nachteil, dass sie in der Regel den Spalt nicht komplett schließt oder - wenn die Leiste zu breit dimensioniert ist - den Laderaumboden beschädigen kann.
Um dieses Problem zu beheben, sind auch Nutzfahrzeuge bekannt, bei denen eine Gummidichtung am Laderaumboden angeordnet ist. Hierbei besteht wiederum das Problem, dass diese Gummidichtung durch mechanische Belastung schnell beschädigt und vom Laderaumboden abgelöst wird. Nach einer derartigen Beschädigung besteht wieder das Problem der Undichtigkeit des Laderaums. Es muss dann wieder eine neue Gummidichtung am Laderaumboden befestigt werden, was zeit- und kostenintensiv ist.

Oftmals ist es auch gewünscht, ein Scharnierlager oder einen Scharnierbolzen am unteren Rand der Bordwand anzubringen, um eine weitere Verschwenkmöglichkeit der Bordwand zu erreichen. Dies erfolgt bislang dadurch, dass das Scharnierlager oder ein Scharnierbolzen an der Bordwand angeschweißt wird. Dies ist zum einen aufwendig, zum anderen besteht bei angeschweißten Scharnieren das Problem, dass sie kaum mehr von der Bordwand lösbar sind und dabei ein Verzug bei der Bordwand entsteht.

Der vorliegenden Erfindung liegt die Aufgabe zugrunde, ein Bordwandelement sowie ein Nutzfahrzeug zur Verfügung zu stellen, welche die Nachteile aus dem Stand der Technik überwinden.

Diese Aufgabe wird erfindungsgemäß gelöst durch ein Bordwandelement der eingangs genannten Art, welches dadurch gekennzeichnet ist, dass im Bereich des unteren Längsrandes eine Aufnahmeeinrichtung zur Aufnahme eines Dichtelementes und/oder eines Nutsteins angeordnet ist.

Durch die Tatsache, dass im Bereich des unteren Längsrandes eine Aufnahmeeinrichtung zur Aufnahme eines Dichtelements angeordnet ist, ist es möglich, an die jeweiligen Abstände zwischen Bordwand und Laderaumboden angepasste Dichtelemente in das erfindungsgemäße Bordwandelement zu integrieren. Bei einer besonders bevorzugten Ausführungsform des erfindungsgemäßen Bordwandelements ist eine im Wesentlichen formschlüssige Aufnahme des Dichtelements in der Aufnahmeeinrichtung möglich. Hierdurch wird das Dichtelement bereits durch den Formschluss relativ fest in der Aufnahmeeinrichtung gehalten. Ein weiterer Vorteil einer derartigen Aufnahmeeinrichtung besteht darin, dass ein Dichtelement nach einem Verschleiß schnell und einfach wieder gegen ein neues ausgetauscht werden kann.

Mit dem erfindungsgemäßen Bordwandelement ist jedoch nicht nur die Integration eines Dichtelements möglich, sondern auch die Aufnahme eines Nutsteins. Durch Integrierung eines derartigen Nutsteins kann wiederum ein Scharnierlager am Bordwandelement befestigt werden, indem das Scharnierlager oder der Scharnierbolzen durch einfaches Anschrauben am Nutstein befestigt wird. Wird das Scharnierlager bzw. der Bolzen nach einer gewissen Zeit nicht mehr benötigt, kann es schnell und einfach durch Lösen der Schraubverbindungen wieder entfernt werden.

Mit Vorteil erstreckt sich die Aufnahmeeinrichtung im Wesentlichen über die gesamte Länge des unteren Längsrandes. Dadurch ist gewährleistet, dass nach Aufnahme eines Dichtelements, welches seinerzeit eine Länge aufweist, die mindestens der Länge des unteren Längsrandes entspricht, eine Abdichtung über die gesamte Länge des Bordwandelements erreicht wird.

Bei einer besonders bevorzugten Ausführungsform des erfindungsgemäßen Bordwandelements ist die Aufnahmeeinrichtung als Nut, insbesondere als Nut mit einem Nutgrund und zwei vom Nutgrund aus aufeinander zu laufenden Nutschenkeln ausgebildet. Eine derartige Aufnahmeeinrichtung ist mit dem Profilierverfahren herstellbar und besonders gut geeignet, ein entsprechend geformtes Dichtelement formschlüssig aufzunehmen.

Bei einer besonders bevorzugten Ausführungsform des erfindungsgemäßen Bordwandelements ist dieses aus einem einzigen Metallblech, insbesondere einemStahlblech mit verschiedenen Legierungen, Edelstahlblech oder einer Aluminiumlegierung gefertigt, das, insbesondere durch Kaltverformen (Profilieren), zu einem Profil geformt ist. Ein derartiges Bordwandelement, welches aus einem einzigen Metallblech zu einem Profil geformt ist, d.h., bei dem auch die Aufnahmeeinrichtung von diesem einzigen Metallblech gebildet ist, weist eine besonders hohe Stabilität auf. Des Weiteren kann ein derartiges Bordwandelement durch entsprechende Formwerkzeuge hergestellt werden.

Mit Vorteil ist das genannte Metallblech des Bordwandelements zumindest im Bereich der Aufnahmeeinrichtung zu einem Hohlprofil, insbesondere Kanal oder Kasten bzw. Scheuerleiste geformt, wobei ein unteres Ende des Hohlprofils die Aufnahmeeinrichtung bildet, indem das Hohlprofil am unteren Ende vorzugsweise eine Einbuchtung aufweist. Durch ein derartiges, insbesondere mittels Laser durchgehend verschweißtes Hohlprofil im Bereich der Aufnahmeeinrichtung wird eine weitere Stabilitätserhöhung des gesamten Bordwandelements erreicht. Auch wird durch ein derartiges Hohlprofil die Bildung einer Aufnahmeeinrichtung zur formschlüssigen Aufnahme eines Dichtelements gefördert.

In der Regel weist das Ausgangsmaterial (insbesondere Stahlblech mit verschiedenen Legierungen, Edelstahlblech oder Aluminiumlegierung) eine Dicke von 1 mm bis 3 mm, vorzugsweise von 1,25 mm bis 2,5 mm auf.

Bei einer besonders bevorzugten Ausführungsform des erfindungsgemäßen Bordwandelements ist diesem ein Dichtelement zugeordnet, welches Dichtelement einen Dichtabschnitt sowie einen Einführabschnitt zum Einführen in die Aufnahmeeinrichtung des Bordwandelements aufweist, wobei der Einführabschnitt vorzugsweise derart an die Form und Größe der Aufnahmeeinrichtung angepasst ist, dass der Einführabschnitt im Wesentlichen formschlüssig in der Aufnahmeeinrichtung gehalten werden kann. Bei einer Weiterbildung dieser Ausführungsform ist es auch möglich, den Einführabschnitt und den Dichtabschnitt des Dichtelements zu trennen, sodass nach einem Verschleiß des Dichtabschnitts lediglich der Dichtabschnitt ausgewechselt werden muss.

In der Regel ist der Einführabschnitt als Einschubprofil ausgebildet. Dieses Einschubprofil ist an die Form und Größe der Aufnahmeeinrichtung angepasst.

Mit Vorteil ist der Dichtabschnitt des Dichtelements als Bürste ausgebildet, wobei die Borsten der Bürste vorzugsweise aus Kunststoff, wie PBT, PP, PA, insbesondere aus PET gefertigt sind. Eine Dichtbürste als Dichtabschnitt hat den Vorteil, dass sie das Auslaufen des Schüttgutes verhindert, gleichzeitig jedoch ermöglicht, dass Wasser zwischen den Borsten auslaufen kann. Kein oder nur sehr wenig Wasser bleibt so auf dem Laderaumboden zurück. Durch den Einsatz einer derartigen Dichtbürste kann auch ein größerer Spalt als die üblichen 1 bis 2 mm zwischen Bordwandelement und Laderaumboden bestehen. Ein Spalt von ca. 8 mm verhindert, dass z. B. durch eingeklemmte Steine, Erdreich oder andere Gegenstände die Lackoberfläche der Bordwände und des Laderaumbodens beschädigt werden, was zum Rosten führen kann.

Bei einer weiteren Ausführungsform des erfindungsgemäßen Bordwandelements ist der Dichtabschnitt des Dichtelements als Dichtlippe oder Dichtungsprofil ausgebildet, die vorzugsweise aus Gummi oder Kautschuk gefertigt sind. Ähnlich wie eine Dichtbürste hat auch eine Dichtlippe oder ein Dichtungsprofil den Vorteil, dass sie/es flexibel ist und sich im geschlossenen Zustand des Laderaums abdichtend an den Laderaumboden anschmiegen kann ohne den Laderaumboden zu beschädigen.

Mit Vorteil ist das Dichtelement, insbesondere der Einführabschnitt des Dichtelements mit Hilfe von Befestigungselementen, insbesondere von Metallnieten an der Aufnahmeeinrichtung fixierbar. Dadurch ist es möglich, das Dichtelement absolut ortsfest an der Aufnahmeeinrichtung zu fixieren. Dadurch wird verhindert, dass es trotz formschlüssiger Verbindung zwischen Dichtelement und Aufnahmeeinrichtung zu einem Verrutschen des Dichtelements in der Aufnahmeeinrichtung kommt. Hierzu reichen in der Regel ein oder höchstens zwei Befestigungsmittel aus, um eine derartige Fixierung zu erreichen. Dadurch ist es auch schnell und einfach möglich, die Befestigungselemente wieder zu entfernen, wenn ein Auswechseln des Dichtelements gewünscht ist.

Bei einer weiteren Ausführungsform des erfindungsgemäßen Bordwandelements ist diesem ein Nutstein und ein Scharnierlager oder Scharnierbolzen zugeordnet, welcher Nutstein in die Aufnahmeeinrichtung einführbar ist und an welchem das Scharnierlager bzw. Scharnierbolzen befestigt werden kann. Dies führt zu den bereits oben beschriebenen Vorteilen.

Das erfindungsgemäße Bordwandelement kann sowohl eine Grund- und/oder eine Aufsatzbordwand sein. Bei einer Grundbordwand steht das Bordwandelement über das integrierte Dichtelement direkt mit dem Laderaumboden in Verbindung. Bei einer Aufsatzbordwand befindet sich das Bordwandelement oberhalb der Grundbordwand. In diesem Falle wird ein Spalt zwischen der Aufsatzbordwand und der Grundbordwand durch ein in die Aufsatzbordwand integriertes Dichtelement abgedichtet.

Bei einer derartigen Bauweise können die Grundbordwand und die Aufsatzbordwand formidentisch ausgebildet sein.

Die vorliegende Erfindung betrifft ferner ein Bordwandelement, insbesondere eine Bordwand für Nutzfahrzeuge, wie LKW's, Anhänger, Pritschenfahrzeuge, Kipper oder landwirtschaftliche Fahrzeuge, mit einem oberen Längsrand (z.B. Hohlprofil), und einem unteren Längsrand (z.B. Hohlprofil) sowie zwei Seitenrändern, welches dadurch gekennzeichnet ist, dass im Bereich des unteren Längsrandes ein Dichtelement mit Dichtborsten angeordnet ist. Ein derartiges Bordwandelement weist die o.g. Vorteile eines Bordwandelements mit integriertem Dichtelement auf, welches als Dichtbürste ausgebildet ist.

Die Borsten der Dichtbürste können auch aus Metall, wie beispielsweise Messing oder Edelstahl gefertigt sein. Bei einer besonders bevorzugten Ausführungsform des erfindungsgemäßen Bordwandelements sind die Dichtborsten jedoch aus Kunststoff, wie z.B. PBT, PP, PA, insbesondere PET gefertigt. Dies bringt die bereits oben dargelegten Vorteile einer Dichtbürste aus PET. Dieses Material nimmt auch keine Feuchtigkeit auf.

Mit Vorteil entspricht die Länge des Dichtelements im Wesentlichen der Länge des unteren Längsrandes des Bordwandelements.

Die vorliegende Erfindung betrifft ferner ein Nutzfahrzeug, insbesondere einen LKW, Anhänger, Pritschenfahrzeug, Kipper oder landwirtschaftliches Fahrzeug, mit einem Laderaumboden sowie mindestens einem oberhalb des Laderaumbodens angeordneten Bordwandelement nach einem der Ansprüche 1 bis 16, wobei zumindest in einer Transportstellung des Bordwandelements zwischen dem Laderaumboden und dem unteren Längsrand des Bordwandelements ein Abstand besteht, welcher durch ein Dichtelement, welches in die Aufnahmeeinrichtung des Bordwandelements integrierbar ist, überbrückbar ist. Ein derartiges Nutzfahrzeug weist die bereits oben im Rahmen des erfindungsgemäßen Bordwandelements dargelegten Vorteile auf.

In der Regel ist der Abstand zwischen dem Laderaumboden und dem unteren Längsrand des Bordwandelements ca. 5 mm - 10 mm, insbesondere 8 mm.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Figur 1:: eine perspektivische Darstellung eines erfindungsgemäßen Bordwandelements mit integrierter Dichtbürste;
- Figur 2:: einen vergrößerten Ausschnitt aus dem Bereich der Aufnahmeeinrichtung des Bordwandelements von Figur 1;
- Figur 3:: eine Seitenansicht des Bordwandelements von Figur 1 ohne Dichtelement;
- Figur 4:: einen Ausschnitt aus einem erfindungsgemäßen Pritschenfahrzeug mit einem Bordwandelement nach Figur 1 (ohne Dichtelement);
- Figur 5:: eine Seitenansicht des erfindungsgemäßen Bordwandelements nach Figur 1, wobei neben einem Dichtelement auch ein Nutstein mit einem Scharnierlager bzw. einem Scharnierbolzen in der Aufnahmeeinrichtung gehalten werden;
- Figur 6:: eine perspektivische Darstellung des Bordwandelements von Figur 5;
- Figur 7:: eine Bordwand mit Grundbordwandelement und Aufsatzbordwandelement;
- Figur 8:: einen Querschnitt durch ein Dichtprofil;
- Figur 9:: eine perspektivische Darstellung des Bordwandelements nach Figur 1, wobei das Dichtprofil nach Figur 8 integriert ist.

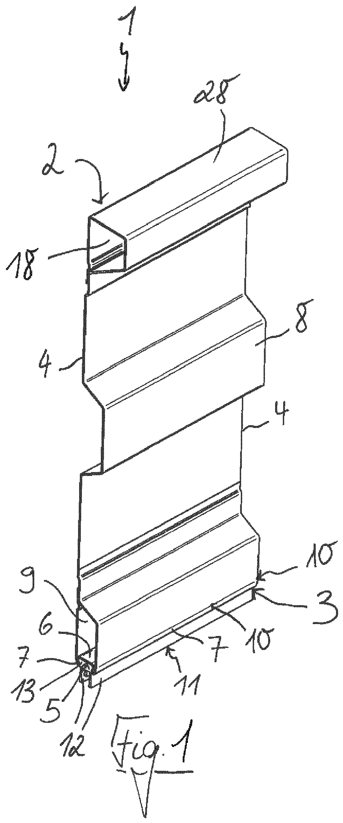

Figur 1 zeigt eine perspektivische Darstellung eines erfindungsgemäßen Bordwandelements 1 in Form einer Ladebordwand für ein Pritschenfahrzeug. Das Bordwandelement 1 umfasst einen oberen Längsrand 2, einen unteren Längsrand 3 sowie zwei Seitenränder 4, die mit verschiedenen Endstücken verschweißt werden können. Das Bordwandelement 1 weist im Bereich des unteren Längsrandes 3 eine Aufnahmeeinrichtung in Form einer Aufhahmenut 5 auf. Die Aufnahmenut 5 erstreckt sich über die gesamte Länge des unteren Längsrandes 3 des Bordwandelements 1.

Die Aufnahmenut 5 umfasst einen Nutgrund 6 und weist zwei vom Nutgrund 6 aus aufeinander zulaufende Nutschenkel 7 auf.

Das Bordwandelement 1 ist aus einem einzigen Stahlblech gefertigt, das durch Kaltverformen zu einem Profil geformt ist. Dieses Profil weist u. a. eine Längssicke 8 auf, die zur Stabilisierung des Bordwandelements beiträgt. Es können auch mehrere Sicken sein. Das Stahlblech des Bordwandelements 1 ist im Bereich der Aufnahmenut 5 zu einem Kanal 9 mit eckigem Querschnitt geformt. Ein unteres Ende 10 des Kanals 9 bildet die Aufnahmenut 5, indem der Kanal 9 am unteren Ende 10 eine Einbuchtung aufweist, welche die Aufnahmenut 5 bildet. Im Bereich der Nutschenkel 7 bildet das Stahlblech jeweils eine Art Schleife (Falz), sodass zwei Lagen an Stahlblech aneinander liegen. Dies trägt zu einer hohen Stabilität und Haltekraft der Nutschenkel 7 bei. Der Kanal 9 trägt ebenfalls zu einer hohen Stabilität des gesamten Bordwandelements 1 bei. Die Nutschenkel 7 bilden auch eine Tropfkante, besonders auf der Außenseite des Bordwandelements, welche verhindert, dass Wasser teilweise oder ganz in einen Landeraum eindringen kann.

Das Stahlblech des Bordwandelements 1 weist eine Dicke von ca. 2 mm auf. Die Höhe des Bordwandelements kann bis ca. 1.000 mm betragen.

In der Aufnahmenut 5 ist ein Dichtelement in Form einer Dichtbürste 11 angeordnet. Die Dichtbürste 11 weist zwei Dichtabschnitte 12 auf, welche aus PET-Borsten bestehen. Die beiden Borstenreihen 12 sind den vorliegenden Zeichnungen nur schematisch dargestellt, sodass die einzelnen Borsten hier nicht zu sehen sind. Die Dichtbürste 11 umfasst ferner einen Einführabschnitt in Form eines Einschubprofils 13, welcher die beiden Dichtabschnitte 12 trägt. Das Einschubprofil 13 weist einen trapezähnlichen Querschnitt auf, wobei die oberen Ecken des Trapezes abgerundet ausgebildet sind. Damit ist die Form des Einschubprofils 13 an die Form der Aufnahmenut 5 angepasst. Auch die Größe des Einschubprofils 13 ist so bemessen, dass es formschlüssig in der Aufnahmenut 5 gehalten werden kann.

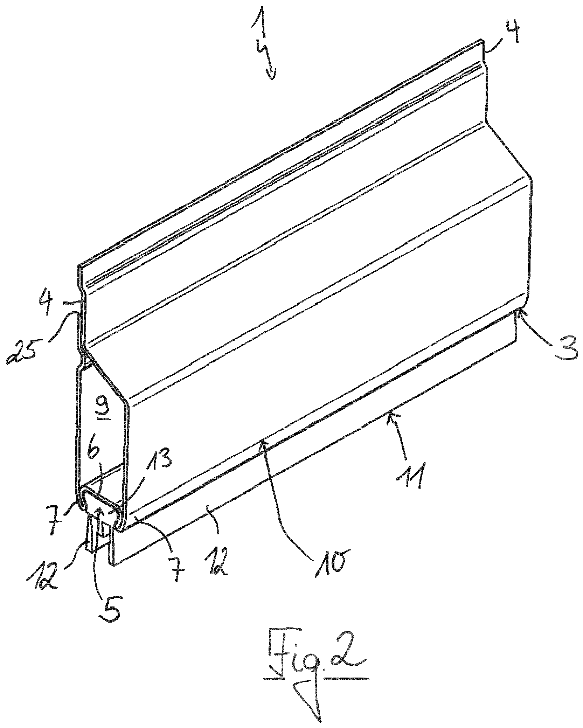

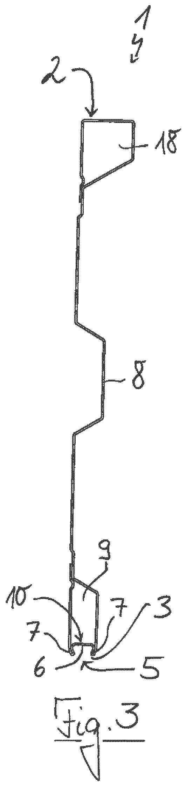

Figur 2 zeigt einen vergrößerten Ausschnitt aus dem Bordwandelement 1 im Bereich der Aufnahmenut 5. In dieser Darstellung werden gleiche Elemente mit den gleichen Bezugszeichen wie in Figur 1 gekennzeichnet. Dies gilt auch für die übrigen Figuren. Figur 3 zeigt eine Seitenansicht des Bordwandelements 1. Auch am oberen Längsrand 2 des Bordwandelements 1 bildet das Stahlblech des Bordwandelements 1 einen Kanal 18 mit eckigem Querschnitt. Auch dieser Kanal (Hohlprofil) trägt zu einer Erhöhung der Stabilität des gesamten Bordwandelements 1 bei. Die das obere Ende des Kanals 18 bildende Fläche 28 kann leicht schräg ausgebildet sein. Dadurch können Schmutzpartikel abrutschen, sodass eine Schmutzansammlung auf dem Kanal 18 verhindert werden kann. Beide Kanäle 9 und 18 sind durchgehend laserverschweißt. Das Bezugszeichen 25 kennzeichnet die Schweißnaht.

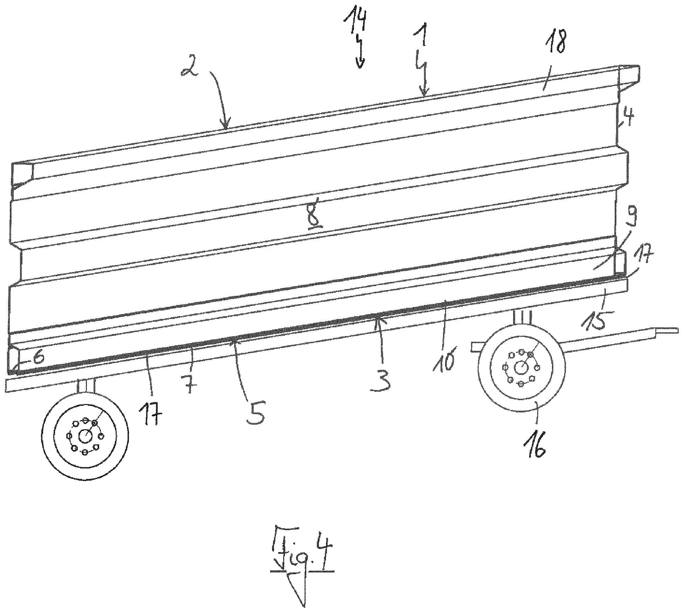

Figur 4 zeigt einen Ausschnitt aus einem erfindungsgemäßen Nutfahrzeug 14 mit dem erfindungsgemäßen Bordwandelement 1 sowie einem Laderaumboden 15. Des Weiteren sind in dieser Darstellung noch zwei Räder 16 des Fahrzeuges 14 zu sehen. Zwischen dem Bordwandelement 1 und dem Laderaumboden 15 besteht ein Spalt 17, welcher durch ein in die Aufnahmenut 5 einschiebbares Dichtelement geschlossen werden kann.

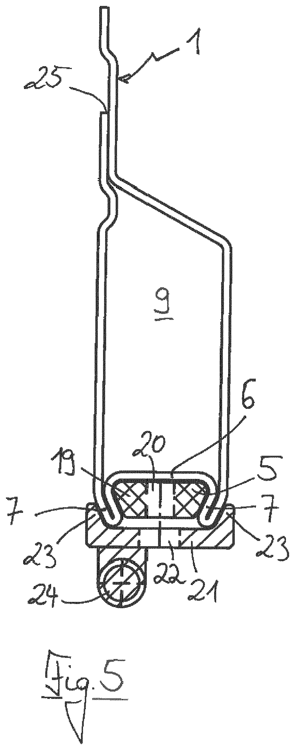

Figur 5 zeigt eine Seitenansicht des Bordwandelements 1 im Bereich der Aufnahmenut 5, wobei in diesem Falle neben einem Dichtelement (in dieser Darstellung nicht sichtbar) auch ein Nutstein 19 in die Aufnahmenut 5 integriert ist. Auch der Nutstein 19 weist einen trapezähnlichen Querschnitt auf. Des Weiteren weist der Nutstein 19 einen Schraubkanal 20 auf. Über eine in den Nutstein 19 einzuschraubende Schraube ist der Nutstein 19 mit einem Gegenstück 21 verbunden, welches seinerseits einen Schraubkanal 22 zur gemeinsamen Aufnahme einer Schraube aufweist. Dadurch kann das Gegenstück 21, welches an die äußere Form der Aufnahmenut 5 angepasst ist und mit Seitenflügeln 23 an den Nutschenkeln anliegt, mit dem Nutstein 19 verbunden werden. Am Gegenstück 21 ist ein Scharniergelenk 24 angeordnet, sodass ein Schamiergelenk ohne jegliches Schweißen am Bordwandelement 1 durch einfaches Festschrauben am Nutstein 19 angeordnet werden kann.

Die Materialqualität des Stahlblechs des Bordwandelements 1 ist von S235 JR bis S420 MC ausgewählt. Es kann auch aus Edelstahlblech oder Aluminiumlegierung gefertigt werden.

Mit dem erfindungsgemäßen Bordwandelement kann die Lagerhaltung entsprechender Bordwände halbiert werden.

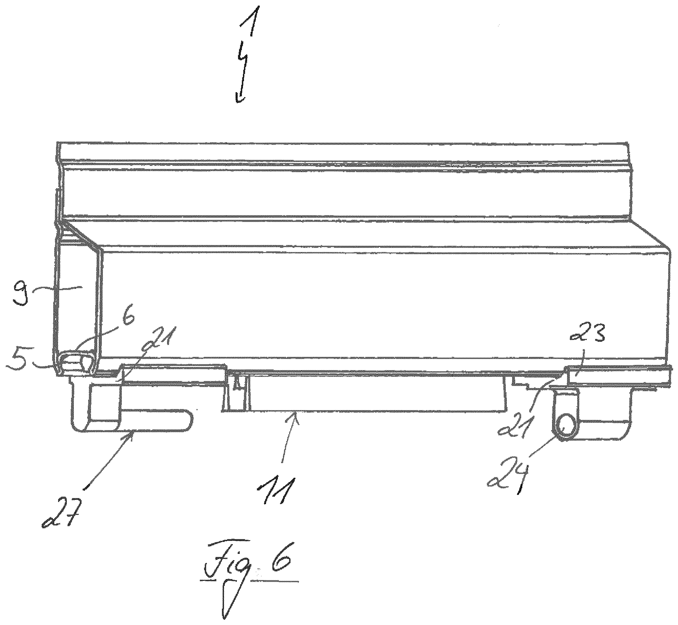

Figur 6 zeigt eine perspektivische Darstellung des Bordwandelements 1 von Figur 5. In dieser Darstellung ist gut zu erkennen, dass in die Aufnahmenut neben dem Nutstein 19, über den das Scharniergelenk 24 am Bordwandelement 1 angeordnet ist, auch die Dichtbürste 11 sowie ein weiterer Nutstein 19, über den ein Scharnierbolzen 27 am Bordwandelement 1 angeordnet ist, integriert sind.

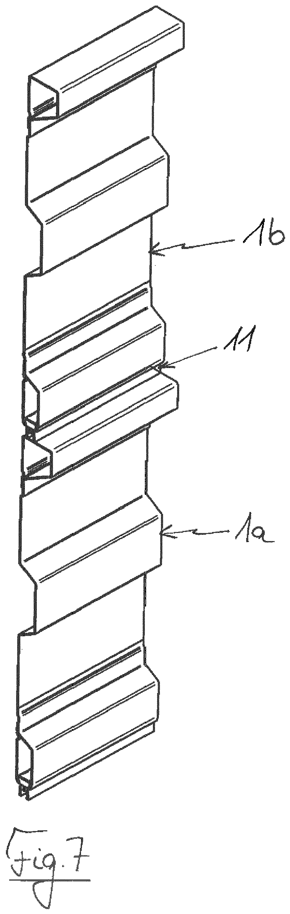

Figur 7 zeigt eine Bordwand, die ein Grundbordwandelement 1a und ein auf das Grundbordwandelement 1a aufgesetztes Aufsatzbordwandelement 1b umfasst. Die beiden Bordwandelemente 1a und 1b sind formidentisch ausgebildet. Die beiden Bordwandelemente 1a und 1b sind über die Dichtbürste 11 des Aufsatzbordwandelements 1b miteinander verbunden. Die Dichtbürste 11 des Aufsatzbordwandelements 1b dichtet den Spalt zwischen den beiden Bordwandelementen 1a und 1b ab.

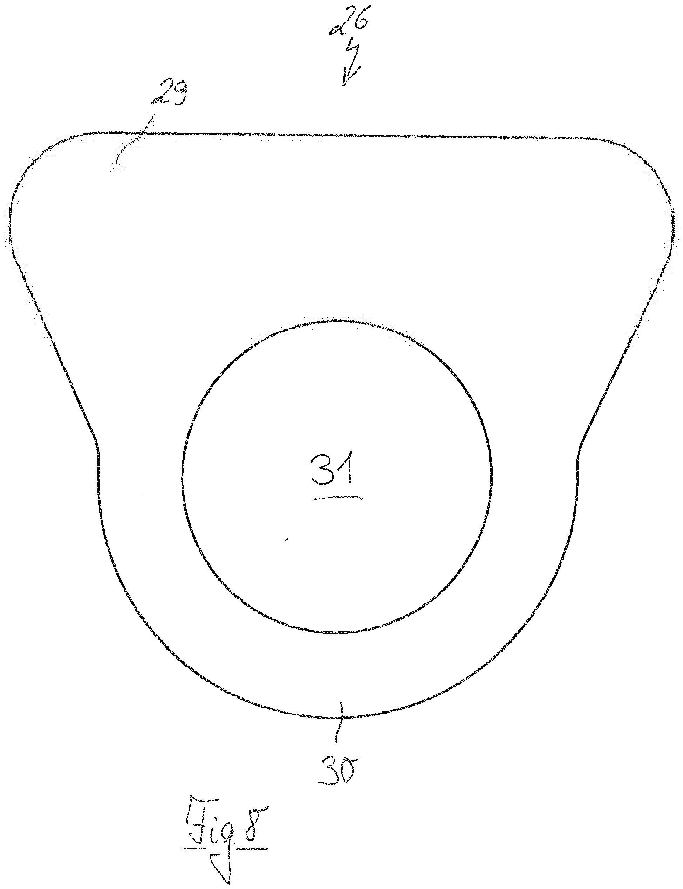

Figur 8 zeigt einen Querschnitt durch eine bevorzugte Ausführungsform eines Dichtprofils 26. Dieses Dichtprofil 26 weist einen Einschubabschnitt 29 sowie einen Dichtabschnitt 30 auf. Der Dichtabschnitt 30 ist im Wesentlichen kreisrund ausgebildet. Der Einschubabschnitt 29 ist an die Form der Aufnahmenut 5 angepasst. Im Inneren des Dichtungsprofils 26 befindet sich ein Hohlraum 31. Beim Aufsetzen des Dichtungsprofils 26 mit seinem Dichtabschnitt 30 auf einen Untergrund ändert sich die kreisrunde Form des Dichtabschnitts 30 in eine abgeplattete Form, sodass eine optimale Dichtwirkung erzielt werden kann.

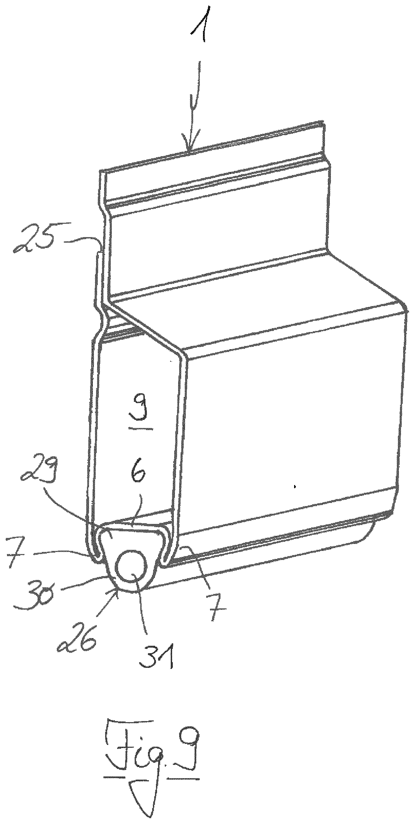

Figur 9 zeigt eine perspektivische Darstellung des unteren Abschnitts des Bordwandelements 1, welches das Dichtprofil 26 trägt.

### Bezugszeichenliste

- 1: Bordwandelement
- 1a: Grundbordwandelement
- 1b: Aufsatzbordwandelement
- 2: Oberer Längsrand
- 3: Unterer Längsrand
- 4: Seitenränder
- 5: Aufnahmenut
- 6: Nutgrund
- 7: Nutschenkel
- 8: Längssicke
- 9: Unterer Kanal
- 10: Unteres Ende des Kanals 9
- 11: Dichtbürste
- 12: Dichtabschnitte
- 13: Einschubprofil
- 14: Nutzfahrzeug
- 15: Laderaumboden
- 16: Räder
- 17: Spalt
- 18: Oberer Kanal
- 19: Nutstein
- 20: Schraubkanal des Nutsteins 19
- 21: Gegenstück
- 22: Schraubkanal des Gegenstücks 21
- 23: Seitenflügel des Gegenstücks 21
- 24: Scharniergelenk
- 25: Laserschweißnaht
- 26: Dichtungsprofil
- 27: Scharnierbolzen
- 28: Obere Fläche von 18
- 29: Einschubabschnitt von 26
- 30: Dichtabschnitt von 26
- 31: Hohlraum in 26

## Patentansprüche

1. Bordwandelement (1), insbesondere Bordwand für Nutzfahrzeuge, wie LKW's, Anhänger, Pritschenfahrzeuge, Kipper oder landwirtschaftliche Fahrzeuge, mit einem oberen Längsrand (2) und einem unteren Längsrand (3) sowie zwei Seitenrändern (4), **dadurch gekennzeichnet, dass** im Bereich des unteren Längsrandes (3) eine Aufnahmeeinrichtung (5) zur Aufnahme eines Dichtelements (11) und/oder eines Nutsteins (19) angeordnet ist.

2. Bordwandelement nach Anspruch 1, **dadurch gekennzeichnet, dass** sich die Aufnahmeeinrichtung (5) über die gesamte Länge des unteren Kastens (3) des Bordwandelements (1) erstreckt.

3. Bordwandelement nach einem der Ansprüche 1 oder 2, **dadurch gekennzeichnet, dass** die Aufnahmeeinrichtung als Nut (5), insbesondere als Nut mit einem Nutgrund (6) und zwei vom Nutgrund aus aufeinander zu laufenden Nutschenkeln (7) ausgebildet ist.

4. Bordwandelement nach einem der vorhergehenden Ansprüche, **dadurch gekennzeichnet, dass** es aus einem einzigen Metallblech, insbesondere einem Stahlblech mit verschiedenen Legierungen, Edelstahlblech oder einer Aluminiumlegierung gefertigt ist, das, insbesondere durch Kaltverformen oder Profilieren zu einem Profil geformt ist.

5. Bordwandelement nach Anspruch 4, **dadurch gekennzeichnet, dass** das Metallblech des Bordwandelements (1) zumindest im Bereich der Aufnahmeeinrichtung (5) zu einem Hohlprofil, insbesondere Kanal oder Kasten (9) geformt ist, wobei ein unteres Ende (10) des Hohlprofils (9) die Aufnahmeeinrichtung (5) bildet, indem das Hohlprofil (9) am unteren Ende (10) vorzugsweise eine Einbuchtung (5) aufweist.

6. Bordwandelement nach einem der Ansprüche 4 oder 5, **dadurch gekennzeichnet, dass** das Metallblech eine Dicke von ca. 1 mm bis 3 mm, vorzugsweise von ca. 1,25 mm bis 2,5 mm aufweist.

7. Bordwandelement nach einem der vorgehenden Ansprüche, **dadurch gekennzeichnet, dass** ihm ein Dichtelement (11, 26) zugeordnet ist, welches Dichtelement einen Dichtabschnitt (12, 30) sowie einen Einführabschnitt (13, 29) zum Einführen in die Aufnahmeeinrichtung (5) des Bordwandelements (1) aufweist, wobei der Einführabschnitt (13, 29) vorzugsweise derart an die Form und Größe der Aufnahmeeinrichtung (5) angepasst ist, dass der Einführabschnitt (13, 29) im Wesentlichen formschlüssig in der Aufnahmeeinrichtung (5) gehalten werden kann.

8. Bordwandelement nach Anspruch 7, **dadurch gekennzeichnet, dass** der Einführabschnitt als Einschubprofil (13) ausgebildet ist.

9. Bordwandelement nach einem der Ansprüche 7 oder 8, **dadurch gekennzeichnet, dass** der Dichtabschnitt als Bürste (12) ausgebildet ist, wobei die Borsten der Bürste (12) vorzugsweise aus Kunststoff, wie z.B. PBT, PET, PP, PA, oder Messing gefertigt sind.

10. Bordwandelement nach einem der Ansprüche 7 oder 8, **dadurch gekennzeichnet, dass** der Dichtabschnitt als Dichtlippe oder als Dichtungsprofil (30) ausgebildet ist, die vorzugsweise aus Gummi oder Kautschuk gefertigt ist.

11. Bordwandelement nach einem der Ansprüche 7 bis 10, **dadurch gekennzeichnet, dass** das Dichtelement (11), insbesondere der Einführabschnitt (13) des Dichtelements mit Hilfe von Befestigungselementen, insbesondere von Metallnieten in der Aufnahmeeinrichtung fixierbar ist.

12. Bordwandelement nach einem der Ansprüche 1 bis 6, **dadurch gekennzeichnet, dass** ihm ein Nutstein (19) und ein Scharnierlager (24) bzw. ein Scharnierbolzen (27) zugeordnet ist, welcher Nutstein (19) in die Aufnahmeeinrichtung (5) einführbar ist und an welchem das Scharnierlager bzw. der Scharnierbolzen (24) befestigt werden kann.

13. Bordwandelement nach einem der vorgehenden Ansprüche, **dadurch gekennzeichnet, dass** es eine Grund (la)- und/oder Aufsatzbordwand (1b) ist.

14. Bordwandelement, insbesondere Bordwand für Nutzfahrzeuge, wie LKW'S, Anhänger, Pritschenfahrzeuge, Kipper oder landwirtschaftliche Fahrzeuge, mit einem oberen Längsrand (2) und einem unteren Längsrand (3) sowie zwei Seitenrändern, **dadurch gekennzeichnet, dass** im Bereich des unteren Längsrandes (3) ein Dichtelement mit Dichtborsten angeordnet ist.

15. Bordwandelement nach Anspruch 14, **dadurch gekennzeichnet, dass** die Dichtborsten aus Kunststoff, insbesondere PBT, PP, PA,PET, oder Messing gefertigt sind.

16. Bordwandelement nach einem der Ansprüche 14 oder 15, **dadurch gekennzeichnet, dass** die Länge des Dichtelements im Wesentlichen der Länge des unteren Längsrandes (3) des Bordwandelements (1) entspricht.

17. Nutzfahrzeug (14), insbesondere Pritschenfahrzeug, Kipper, LKW, Anhänger oder landwirtschaftliches Fahrzeug, mit einem Laderaumboden (15) sowie mindestens einem oberhalb des Laderaumbodens (15) angeordneten Bordwandelement (1) nach einem der Ansprüche 1 bis 16, wobei zumindest in einer Transportstellung des Bordwandelements (1) zwischen dem Laderaumboden (15) und dem unteren Längsrand (3) des Bordwandelements (1) ein Abstand (17) besteht, welcher durch ein Dichtelement (11), welches in die Aufnahmeeinrichtung (5) des Bordwandelements (1) integrierbar ist, überbrückbar ist.

18. Nutzfahrzeug nach Anspruch 17, **dadurch gekennzeichnet, dass** der Abstand zwischen dem Bordwandelement (1) und dem Landeraumboden (15) ca. 1 mm bis 10 mm, insbesondere ca. 8 mm beträgt
